# EUROPÄISCHE PATENTSCHRIFT

(11) **EP 1 846 544 B1**
(45) Veröffentlichungstag und Bekanntmachung des Hinweises auf die Patenterteilung: **23.07.2008**
(21) Anmeldenummer: 06701260.9
(22) Anmeldetag: 25.01.2006
(51) Int. Cl.: C11D 3/37, C11D 3/39, C08G 73/02

(54) **POLYMERE HYDROPHOBE AMINONITRILQUATS ZUR BLEICHAKTIVIERUNG**
POLYMERIC HYDROPHOBIC AMINONITRILE QUATS USED FOR BLEACH ACTIVATION
SAVONS INVERTIS D'AMINONITRILE POLYMERES HYDROPHOBES POUR ACTIVER LE BLANCHIMENT

(30) Priorität: 03.02.2005 DE 102005005016
(43) Veröffentlichungstag der Anmeldung: 24.10.2007
(73) Patentinhaber: BASF SE, 67056 Ludwigshafen (DE)
(72) Erfinder: DIETSCHE, Frank, 69198 Schriesheim (DE); OFTRING, Alfred, 67098 Bad Dürkheim (DE)
(74) Vertreter: Isenbruck, Günter
(86) Internationale Anmeldenummer: PCT/EP2006/050428
(87) Internationale Veröffentlichungsnummer: WO 2006/082153

(56) Entgegenhaltungen:
- EP-A- 0 303 520
- GB-A- 1 598 610
- US-A- 5 661 118
- US-B1- 6 338 842

## Beschreibung

Die vorliegende Erfindung betrifft ein Polymer zur Verwendung als Bleichaktivator mit Ammoniumnitril-Einheiten, Verfahren zur Herstellung und dessen Verwendung als Wasch-, Reinigungs- und Desinfektionsmittel sowie bei der Textil- und Papierbleiche.

Bleichaktivatoren mit Ammoniumnitril-Einheiten (Aminonitrilquats) sind seit langem bekannt.

Solche Nitrilquats zeichnen sich gegenüber anderen Bleichaktivatoren insbesondere dadurch aus, dass sie eine kontinuierliche Bleichaktivität über ein breites Temperaturfenster von 20 bis 60°C ermöglichen können. Weiterhin sind diese gut handhabbar, da sie in der Regel fest, wasserlöslich und geruchsarm sind.

Nitrilquats weisen eine hohe Wirksamkeit auf. Meist zeigen diese eine um einen Faktor 5 gesteigerte Wirksamkeit im Vergleich zu TAED bei 20°C auf. Weiterhin ist auf ihre geringe pH-Abhängigkeit hinzuweisen.

Vergleiche von derzeit eingesetzten Bleichaktivatoren in Bezug auf deren Bleichaktivität und Farbschädigung wurden von Reinhardt et al. in Tenside Surf. Det. 34 (1997) 6, 404-409 untersucht. Hierbei zeigten Nitrilquats gute Ergebnisse.

In der Literatur häufig erwähnte Nitrilquats sind monomere Ammonium-Acetonitril Salze der Formel R¹R²R³N⁺-CH₂-CN X⁻, wobei R¹ bis R³ in der Regel Alkylgruppen darstellen.

DE-A 102 11 389 beschreibt ebenfalls solche Salze, bei denen mindestens zwei Reste eine Kohlenwasserstoffkette mit mindestens 4 Kohlenstoffatomen darstellt.

In DE-A 196 05 526 werden ebenfalls Salze der oben genannten Art zur Verwendung als Bleichaktivatoren offenbart, wobei jedoch zwei Reste am Stickstoff gemeinsam mit dem Stickstoff, an dem sie gebunden sind, einen Heterocyclus bilden.

DE-A 100 38 844 beschreibt kationische Bleichaktivatoren in Analogie zu der oben angegebenen Formel, wobei das Anion ein Cumolsulfonat darstellt.

Schließlich finden sich in DE 100 57 045 teilchenförmige Bleichaktivatoren auf der Basis von Acetonitrilen gemäß der obigen Formel.

Ammoniumsubstituierte Benzonitrile sind Gegenstand der US-A 5,707,542.

Bleichmittel mit linearen niedrig-molekularen Polymeren auf Ammoniumacetonitril Basis sind in EP-A 303 520 beschrieben.

Nitrilquats, wie sie aus dem Stand der Technik bekannt sind, weisen jedoch auch einige Nachteile auf.

Zum einen können sie eine signifikante Farbschädigung durch ihre hohe Faseraffinität aufweisen. Weiterhin bergen diese ein verbleibendes Gefährdungspotential und können sensibilisierend wirken. Zudem stellen die Nitrilquats nach dem Stand der Technik zumindest zu einem gewissen Maße eine Umweltgefährdung dar, da sie trotz schneller Hydrolyse nicht oder kaum bioabbaubar sondern nur bioeliminierbar sind.

Es besteht daher nach wie vor ein Bedarf an Nitrilquats, die die im Stand der Technik vorliegenden Nachteile zumindest teilweise nicht oder nicht in dem Maße aufweisen und dennoch vergleichbare oder überlegene Bleichaktivierungseigenschaften aufweisen.

Die Aufgabe der vorliegenden Erfindung ist somit die Bereitstellung von verbesserten Nitrilquats, die zumindest teilweise die Nachteile des Standes der Technik nicht oder in vermindertem Maße aufweisen und/oder dennoch vergleichbare oder überlegene Bleichaktivierungseigenschaften, insbesondere bei hydrophoben Anschmutzungen, aufweisen können.

Die Aufgabe wird gelöst durch ein Polymer zur Verwendung als Bleichaktivator die Monomereneinheiten enthaltend 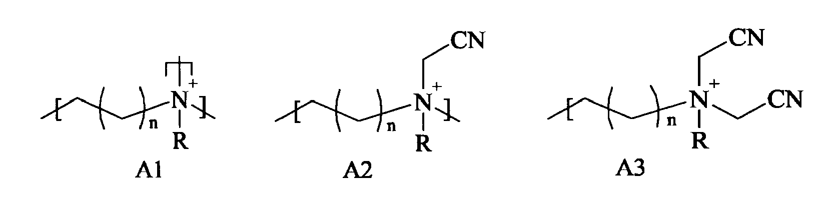 wobei n eine ganze Zahl von 1 bis 4 ist und R ein verzweigter oder unverzweigter gesättigter oder ungesättigter gegebenenfalls durch Sauerstoff unterbrochener Kohlenwasserstoffrest mit 1 bis 20 Kohlenstoffatomen ist.

Es wurde gefunden, dass vermutlich durch die polymere Natur des erfindungsgemäßen Bleichaktivators und insbesondere durch das zusätzliche Vorhandensein der Monomereneinheit A1 verbesserte Eigenschaften erzielt werden können.

So können möglicherweise die gesundheitsschädlichen Wirkungen von Nitrilquats durch eine niedrigere Permeabilität durch beispielsweise Hautkompartimente vermieden oder in ihrer nachteiligen Wirkung vermindert werden. Vorzugsweise kann auch eine niedrigere Kationendichte beim erfindungsgemäßen Polymer eingestellt werden, was zu einer verminderten Faseraffinität und Farb- und Faserschädigung führen kann.

Insbesondere eignet sich das Polymer der vorliegenden Erfindung zum Entfernen von speziell hydrophoben Anschmutzungen, dies insbesondere bei Körperfetten oder Ölen (nativ oder synthetisch), ganz besonders bei tiefen Temperaturen, vorzugsweise bei 0°C bis 25°C.

In A1, A2 und A3 gibt n die Zahl der weiteren Methylengruppen zu der jeweils bereits vorhandenen Gruppe an. Hierbei kann n die Werte 1, 2, 3 oder 4 annehmen. Vorzugsweise ist n = 1.

In A1, A2 und A3 gibt R einen verzweigten oder unverzweigten, gesättigten oder ungesättigten gegebenenfalls durch Sauerstoff unterbrochenen Kohlenwasserstoffrest mit 1 bis 20 Kohlenstoffatomen an. Vorzugsweise handelt es sich bei dem Kohlenwasserstoffrest um einen aliphatischen acyclischen Kohlenwasserstoffrest. Weiterhin bevorzugt weist ein durch Sauerstoff unterbrochener Kohlenwasserstoffrest ausschließlich oder teilweise Ethoxy-, sowie Propoxy-, Butoxy-, oder Pentoxy-Einheiten auf. Insbesondere handelt es sich bei dem Kohlenwasserstoffrest um eine C₁-C₂₀ Alkylkette. Ganz besonders bevorzugt ist R Methyl, Ethyl, n-Propyl, i-Propyl, n-Butyl, i-Butyl oder tert.-Butyl.

Vorzugsweise basiert das Polymer gemäß der vorliegenden Erfindung auf Polyalkyleniminen, bzw. wird aus diesen hergestellt. Insbesondere bevorzugt sind Polyethylenimine als Ausgangsverbindung. Es kann sich jedoch auch um andere Polymere handeln oder um Mischpolymere oder Blockpolymere, wobei mindestens eine Komponente vorzugsweise ein Polyalkylenimin ist. Als weitere Komponenten kommen beispielsweise aliphatische oder aromatische Polyether, amin-terminierte Polymere, wie beispielsweise Jeffamine® der Fa. Huntsman (The Woodlands, USA), oder physikalische Mischungen daraus in Frage.

Weiterhin können in dem Polymer weitere Monomereneinheiten auftreten. So können ungeladene Derivate von A1, A2 und A3 auftreten, bei denen die Gruppe R fehlt. Weiterhin können Derivate von A2 oder A3 als Monomereneinheiten im Polymer der vorliegenden Erfindung vorhanden sein, bei denen eine oder beide Cyanomethylgruppen durch R ersetzt sind.

Vorzugsweise ist in höchstens 25%, weiter bevorzugt in höchstens 50%, mehr bevorzugt in höchstens 75% der im Polymer der vorliegenden Erfindung vorliegenden Monomereneinheiten R zwei- oder dreifach vorhanden.

Ebenso bevorzugt beträgt das Verhältnis an positiv geladenen Monomereneinheiten zu neutralen Monomereneinheiten mindestens 0,25, vorzugsweise mindestens 1, mehr bevorzugt mindestens 5, weiter mehr bevorzugt mindestens 10, weiter mehr bevorzugt 20 am meisten bevorzugt 100.

Der logP Wert des Polymers gemäß der vorliegenden Erfindung beträgt vorzugsweise -3 bis 6,5, mehr bevorzugt -2 bis 4 und besonders bevorzugt -1 bis 2,5. Der logP ist dabei definiert als der Logarithmus des Verteilungskoeffizienten eines Stoffes in einem Oktanol-Wasser-Gemisch. Normalerweise liegt bei einer geringen Aktivität der logP-Wert unter -1 und bei hoher Aktivität wird ein Wert über 1 beobachtet.

Als Gegenion zu den positiv geladenen Gruppen im Polymer können dem Fachmann an sich bekannte Anionen eingesetzt werden. Beispiele hierfür sind Chlorid, Bromid, Iodid, Fluorid, Sulfat, Hydrogensulfat, Carbonat, Hydrogencarbonat, Phosphat, Mono-und Dihydrogenphosphat, Pyrophosphat, Metaphosphat, Nitrat, Metasulfat, Dodecylsulfat, Dodecylbenzolsulfonat, Phosphonat, Methylphosphonat, Methandisulfonat, Methylsulfonat, Ethansulfonat, Toluolsulfonat, Benzolsulfonat oder Cumolsulfonat.

Die Monomereneinheiten A1, A2 und A3 sowie gegebenenfalls andere vorhandene Einheiten können jeweils statistisch verteilt oder Blockweise im Polymer auftreten. Der (molare) Anteil jedes der Monomereneinheiten A1, A2, A3 im Polymer liegt vorzugsweise jeweils unabhängig voneinander im Bereich von 0,01 bis 0,5, mehr bevorzugt im Bereich von 0,05 bis 0,4.

Die mittlere Molekularmasse des Polymers gemäß der vorliegenden Erfindung liegt vorzugsweise im Bereich von 500 g/mol bis 500000 g/mol. Vorzugsweise liegt die mittlere Molekularmasse im Bereich von 500 g/mol bis 50000 g/mol, insbesondere von 800 g/mol bis 25000 g/mol und ganz besonders bevorzugt im Bereich von 1000 g/mol bis 5000 g/mol.

Das Polymer der vorliegenden Erfindung kann nach an sich bekannten Methoden hergestellt werden.

Ein Verfahren zur Herstellung des Polymers enthält die Schritte:
a) Umsetzung eines Polymers die Monomereneinheiten enthaltend 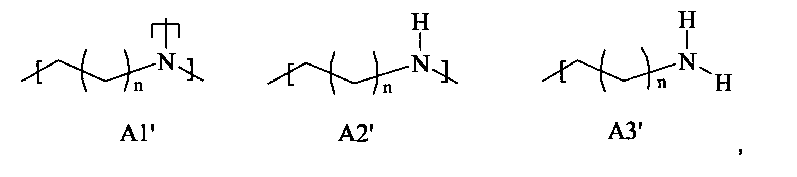 wobei n eine ganze Zahl von 1 bis 4 ist, mit Cyanwasserstoff und Formaldehyd;
b) Umsetzung des Produktes aus a) mit einem Reagenz zur Einführung der Gruppe R, wobei R die oben genannte Bedeutung hat.

Vorzugsweise handelt es sich bei dem Polymer in Schritt a) um ein Polyalkylenimin. Insbesondere bevorzugt sind Polyethylenimine als Ausgangsverbindung. Es kann sich jedoch auch um andere Polymere handeln oder um Mischpolymere deren eine Komponente vorzugsweise ein Polyalkylenimin ist.

Bei dem Reagenz zur Einführung der Gruppe R handelt es sich vorzugsweise um ein Alkylierungsreagenz wie Dialkylsulfat oder Alkyliodid oder Alkoxylierungsreagenzien wie vorzugsweise Ethylenoxid, Propylenoxid oder Butylenoxid. Ganz besonders bevorzugt ist Dimethylsulfat.

Das Polymer der vorliegenden Erfindung eignet sich zur Verwendung in Bleich-, Reinigungs- und Desinfektionsmitteln und insbesondere bei der Textil- und Papierbleiche.

Das Polymer der vorliegenden Erfindung kann auch in Kombination mit anderen Bleichaktivatoren beschichtet bzw. eingesetzt werden. Dies sind beispielsweise Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben. Dabei handelt es sich häufig um Bleichaktivatoren, die eine oder mehrere N- bzw. O-Acylgruppen enthalten und/oder gegebenenfalls substituierte Benzoylgruppen tragen, wie Substanzen aus der Klasse der Anhydride, der Ester, der Imide und der acylierten Imidazole oder Oxime.

Beispiele dafür sind Tetraacetylethylendiamin (TAED), Tetraacetyl-methylendiamin (TAMD), Tetraacetylglykoluril (TAGU), Tetraacetylhexylendiamin (TAHD), N-Acylimide, insbesondere N-Nonanoylsuccinimid (NOSI), acylierte Phenolsulfonate, insbesondere n-Nonanoyl- oder lsononanoyloxybenzolsulfonate (n- bzw. iso-NOBS) und Lauroyloxybenzolsulfonate (LOBS), Pentaacetylglucose (PAG), 1,5-Diacetyl-2,2-dioxo-hexahydro-1,3,5-triazin (DADHT) und Isatosäureanhydrid (ISA).

In Kombination mit dem Polymer der vorliegenden Erfindung können weiterhin Bleichaktivatoren aus der Gruppe bestehend aus Carbonsäureanhydriden, insbesondere Phthalsäureanhydrid, acylierten mehrwertigen Alkoholen, insbesondere Triacetin, Ethylenglykoldiacetat, 2,5- Diacetoxy-2,5-dihydrofuran und den aus den deutschen Patentanmeldungen DE 196 16 693 und DE 196 16 767 bekannten Enolestern sowie acetyliertes Sorbitol und Mannitol bzw. deren in der europäischen Patentanmeldung EP 0 525 239 beschriebene Mischungen (SORMAN), acylierte Zuckerderivate, insbesondere Pentaacetylglukose (PAG), Pentaacetylfructose, Tetraacetylxylose und Octaacetyllactose, sowie acetyliertes, gegebenenfalls N-alkyliertes Glucamin und Gluconolacton, und/oder N-acylierte Lactame, beispielsweise N-Benzoylcaprolactam und Carbonylbiscaprolactam, die aus den internationalen Patentanmeldungen WO 94/27970, WO 94/28102, W094/28103, WO 95/00626, WO 95/14759, WO 95/17498 und WO 96/36686 bekannt sind, eingesetzt werden, weiterhin auch Bis(2-Propylimino)carbonat, siehe DE-A 195 18 039, 195 41 012, 196 09 953 und 197 04 149.

Weiterhin eignen sich in Kombination mit dem Polymer der vorliegenden Erfindung die aus der deutschen Patentanmeldung DE 196 16 769 bekannten hydrophil substituierten Acylacetale und die in der deutschen Patentanmeldung DE 196 16 770 sowie der internationalen Patentanmeldung WO 95/14075 beschriebenen Acyllactame.

Zusätzlich zu den oben aufgeführten konventionellen Bleichaktivatoren oder an deren Stelle können auch die aus den europäischen Patentschriften EP-A 0 446 982 und EP-A 0 453 003 bekannten Sulfonimine und/oder bleichverstärkende Übergangsmetallsalze beziehungsweise Übergangsmetallkomplexe als sogenannte Bleichkatalysatoren mit dem Polymer der vorliegenden Erfindung kombiniert werden. Zu den in Frage kommenden Übergangsmetallverbindungen gehören insbesondere die aus der deutschen Patentanmeldung DE 195 29 905 bekannten Mangan-, Eisen-, Cobalt-, Ruthenium- oder Molydän-Salenkomplexe und deren aus der deutschen Patentanmeldung DE 196 20 267 bekannte N-Analogverbindungen, die aus der deutschen Patentanmeldung DE 195 36 082 bekannten Mangan-, Eisen-, Cobalt-, Ruthenium- oder Molybdän-Carbonylkomplexe, die in der deutschen Patentanmeldung DE 196 05 688 beschriebenen Mangan-, Eisen-, Cobalt, Ruthenium-, Molybdän-, Titan-, Vanadium- und Kupfer-Komplexe mit stickstoffhaltigen Tripod-Liganden, die aus der deutschen Patentanmeldung DE 196 20 411 bekannten Cobalt-, Eisen-, Kupfer-und Ruthenium-Amminkomplexe, die in der deutschen Patentanmeldung DE 44 16 438 beschriebenen Mangan-, Kupfer- und Cobalt-Komplexe, die in der europäischen Patentanmeldung EP-A 0 272 030 beschriebenen Cobalt-Komplexe; die aus der europäischen Patentanmeldung EP-A 0 693 550 bekannten Mangan-Komplexe, die aus der europäischen Patentschrift EP-A 0 392 592 bekannten Mangan-, Eisen-, Cobalt- und Kupfer-Komplexe und/oder die in der europäischen Patentschrift EP-B 0 443 651 oder den europäischen Patentanmeldungen EP-A 0458 397, EP-A 0458 398, EP-A 0549 271, EP-A 0 549 272, EP-A 0 544 490 und EP-A 0 544 519 beschriebenen Mangan-Komplexe.

In Kombination mit dem Polymer der vorliegenden Erfindung können bleichverstärkende Übergangsmetallkomplexe, insbesondere mit den Zentralatomen Mn, Fe, Co, Cu, Mo, V, Ti und/oder Ru, bevorzugt ausgewählt aus der Gruppe der Mangan- und Cobaltsalze und -komplexe, besonders bevorzugt der Cobalt(ammin)-Komplexe, der Cobalt(acetat)-Komplexe, der Cobalt(carbonyl)-Komplexe, der Chloride des Cobalts und Mangans und des Mangansulfats ausgewählt werden. Diese bleichverstärkenden Übergangsmetallkomplexe können in üblichen Mengen, vorzugsweise in einer Menge bis zu 5 Gew.-%, insbesondere von 0,0025 Gew.-% bis 1 Gew.-% und besonders bevorzugt von 0,01 Gew.-% bis 0,25 Gew.-%, jeweils bezogen auf die gesamte Reinigerformulierung eingesetzt werden.

Vorzugsweise werden verwendet mehrfach acylierte Alkylendiamine, insbesondere Tetraacetylethylendiamin (TAED), N-Acylimide, insbesondere N-Nonanoylsuccinimid (NOSI), weiterhin Glucosepentaacetat (GPA), Xylosetetraacetat (TAX), Natrium-4-benzoyloxybenzolsulfonat (SBOBS), Natriumtrimethylhexanoyloxybenzolsulfonat (STHOBS), Tetraacetylglucoluril (TAGU), Tetraacetylcyansäure (TACA), Di-N-Acetyldimethylglyoxim (ADMG), 1-Phenyl-3-acetylhydantoin (PAH), acylierte Phenolsulfonate, Nonanoylbenzolsulfonate (NOBS), Isononanoylbenzolsulfonate (isoNOBS), Lauroylbenzolsulfonate (LOBS), Carbonylbiscaprolactam und Bis(2-Propylimino)carbonat.

Das Polymer der vorliegenden Erfindung wird im Allgemeinen in Kombination mit den nachfolgend aufgeführten Bleichmitteln eingesetzt. Alkalimetallperborate und ihre Hydrate und Alkalimetallpercarbonate, wobei bevorzugt Natriumperborat in Form des Mono- oder Tetrahydrats, oder Natriumpercarbonat und dessen Hydrate Verwendung finden. Ebenfalls einsetzbar sind Persulfate und Wasserstoffperoxid und typische Sauerstoffbleichmittel wie organische Persäuren, beispielsweise Perbenzoesäure, Peroxy-alpha-Napthoesäure, Peroxylaurinsäure, Peroxystearinsäure, Phthalimidoperoxycapronsäure, Nonylimidperoxybernsteinsäure, Nonylimidperoxyadipinsäure, 1,12-Diperoxydodecandisäure, 1,9-Diperoxyazelainsäure, Diperoxoisophthalsäure und 2-Decyldiperoxybutan-1,4-disäure. Weiterhin eignen sich kationische Peroxysäuren, wie sie in den Patentanmeldungen US 5 422 028, US 5 294 362 und US 5 292 447 beschrieben sind, sowie Sulfonylperoxysäuren, wie sie beispielsweise in der Patentanmeldung US 5 039 447 beschrieben sind. Weiterhin kann der Zusatz geringer Mengen von Bleichmittelstabilisatoren wie beispielsweise Phosphonaten, Boraten, Metaboraten, Metasilikaten und Magnesiumsalzen sinnvoll sein.

Das peroxysäurehaltige Bleichmittel wird in Mengen verwendet, die eine Menge von verfügbarem Sauerstoff von etwa 0,1% bis etwa 10%, vorzugsweise von etwa 0,5% bis etwa 5%, insbesondere von etwa 1% bis 4% ergeben. Die Prozentangaben beziehen sich auf das Gesamtgewicht der Waschmittelzusammensetzung.

Der Anteil der peroxidhaltigen Bleichmittel in den erfindungsgemäßen Reinigungsmittelzusammensetzungen liegt von etwa 0,1 Gew.-% bis etwa 95 Gew.-% und vorzugsweise von etwa 1 Gew.-% und etwa 60 Gew.-%. Wenn die Bleichmittelzusammensetzung auch eine voll formulierte Reinigungsmittelzusammensetzung ist, ist es bevorzugt, wenn der Anteil des peroxidhaltigen Bleichmittels von etwa 1 Gew.-% bis etwa 20 Gew.-% liegt.

Das Polymer der vorliegenden Erfindung kann auch in Kombination mit sogenannten Bleichkraftverstärkern eingesetzt werden. Dabei handelt es sich um Substanzen, die die Wirkung der bekannten Bleichmittel noch weiter steigern. Als Bleichaktivatoren eignen sich insbesondere die Diamine, die in der DE-A 196 11 992 beschrieben sind. Dabei handelt es sich um Verbindungen, die sekundäre Amingruppen-NHR¹ enthalten und die niedermolekular, oligomer oder polymer sind. Insbesondere handelt es sich um sekundäre Amine der allgemeinen Formel R¹NH-[(CR³R⁴)ₘ-NH]ₙ-R² (II), wobei n einen ganzzahligen Wert von 0 bis 20 und m einen ganzzahligen Wert von 2 bis 4 hat, die Reste R³ und R⁴ unabhängig C₁-C₃₀-, vorzugsweise C₁-C₁₅-Hydrocarbylreste sind und die Reste R¹ und R² unabhängig voneinander C₁-C₃₀-, vorzugsweise C₁-C₁₅-Hydrocarbylreste sind oder gegebenenfalls gemeinsam einen Zyklus ausbilden. Die in der DE-A 196 11 992 offenbarten Bleichkraftverstärker sind ein integraler Bestandteil der vorliegenden Erfindung und durch Referenz in diese einbezogen.

Das Polymer der vorliegenden Erfindung kann als Bleichaktivator für die Anwendung in Waschmitteln, Reinigungsmitteln, Geschirreinigungsmitteln, Fleckensalzen, Desinfektionsmitteln, Gebissreinigem, der Faserbleiche, wie z. B. der Zellstoffbleiche, der Holzstoffbleiche oder bei der Baumwollfaserbleiche wie auch der Haarbleiche eingesetzt werden. Bevorzugte Einsatzbereiche zu den oben erwähnten sind Waschmittel und Geschirreinigungsmittel.

Das Polymer der vorliegenden Erfindung als Bleichaktivator wird in den für diese Anwendungsgebiete jeweils vorgesehenen Formulierungen vorzugsweise in Mengen bis 10 Gew.-%, insbesondere 0,1 Gew.-% bis 8 Gew.-%, besonders 0,5 bis 8 Gew.-% und besonders bevorzugt 0,8 bis 5 Gew.-% bezogen auf die gesamte Formulierung eingesetzt. Hauptanwendungsgebiete sind haushalts- und industrielle Textilwaschmittel und haushalts- und industrielle Geschirreinigungsformulierungen. Die Formulierungen, in denen das Polymer der vorliegenden Erfindung eingesetzt werden kann, sind beispielhaft für die Anwendungsgebiete Textilwaschmittel und Maschinengeschirreiniger im Folgenden beschrieben.

### Zusammensetzung Haushaltstextilwaschmittel

Die Waschmittelformulierungen, in denen das Polymer der vorliegenden Erfindung eingesetzt werden kann, sind pulver-, granulat-, pasten- oder gelförmig, oder es sind feste Waschstücke. Die Formulierungen sind je nach ihrer vorgesehenen Anwendung in ihrer Zusammensetzung der Art der zu waschenden Textilien anzupassen. Sie enthalten konventionelle Waschmittelinhaltsstoffe, die dem Stand der Technik entsprechen. Repräsentative Beispiele für solche Wasch- und Reinigungsmittelinhaltsstoffe werden im Folgenden beschrieben.

Die Gesamtkonzentration von Tensiden in der fertigen Waschmittelformulierung kann von 1 bis 99 Gew.-%, bevorzugt von 5 bis 80 Gew.-% betragen. Die verwendeten Tenside können anionisch, nichtionisch, amphoter oder kationisch sein. Es können auch Mischungen der genannten Tenside verwendet werden. Bevorzugte Waschmittelformulierungen enthalten anionische und/oder nichtionische Tenside und deren Mischungen mit weiteren Tensiden.

Als anionische Tenside kommen Sulfate, Sulfonate, Carboxylate, Phosphate und deren Mischungen in Betracht. Geeignete Kationen sind hierbei Alkalimetalle, wie beispielsweise Natrium oder Kalium oder Erdalkalimetalle, wie z. B. Calcium oder Magnesium sowie Ammonium, substituierte Ammoniumverbindungen einschließlich Mono-, Di- oder Triethanolammoniumkationen und Mischungen daraus. Unter den anionischen Tensiden sind Alkylestersulfonate, Alkylsulfate, Alkylethersulfate, Alkylbenzolsulfonate, sekundäre Alkansulfonate und Seifen bevorzugt. Diese werden nachfolgend beschrieben.

Alkylestersulfonate sind unter anderem lineare Ester von C₁₈-C₂₀-Carboxylsäuren (Fettsäuren), welche mittels gasförmigem SO₃ sulfoniert werden, wie dies beispielsweise in "The Journal of the American Oil Chemists Society" 52 (1975), p. 323-329, beschrieben wird. Geeignete Ausgangsmaterialien sind natürliche Fette wie z. B. Talg, Kokosöl und Palmöl, aber auch Fette synthetischer Natur sein. Bevorzugte Alkylestersulfonate sind Verbindungen der Formel 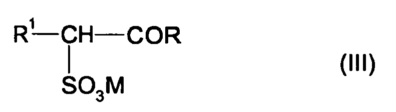 worin R¹ einen C₈-C₂₀-Kohlenwasserstoffrest, bevorzugt Alkyl und R einen C₁-C₆-Kohlenwasserstoffrest, bevorzugt Alkyl, darstellt. M steht für ein Kation, das ein wasserlösliches Salz mit dem Alkylestersulfonat bildet. Geeignete Kationen sind Natrium, Kalium, Lithium oder Ammoniumkationen wie beispielsweise Monoethanolamin, Diethanolamin und Triethanolamin. Bevorzugt bedeuten R¹ C₁₀-C₁₆-Alkyl und R Methyl, Ethyl oder Isopropyl. Meist bevorzugt sind Methylestersulfonate, in denen R¹ C₁₀-C₁₆-Alkyl bedeutet.

Alkylsulfate sind wasserlösliche Salze oder Säuren der Formel ROSO₃M, worin R ein C₁₀-C₂₄-Kohlenwasserstoffrest, bevorzugt ein Alkyl- oder Hydroxyalkylrest mit C₁₀-C₂₀-Alkylkomponente, besonders bevorzugt ein C₁₂-C₁₈-Alkyl- oder Hydroxyalkylrest ist. M ist Wasserstoff oder ein geeignetes Kation, z.B. ein Alkalimetallkation, vorzugsweise Natrium, Kalium, Lithium oder ein Ammonium- oder substituiertes Ammoniumkation, vorzugsweise ein Methyl-, Dimethyl- und Trimethylammoniumkation oder ein quaternäres Ammoniumkationen, wie beispielsweise das Tetramethylammonium- und Dimethylpiperidiniumkationen und von Alkylaminen wie Ethylamin, Diethylamin, Triethylamin und Mischungen davon abgeleitete quartäre Ammoniumkationen. Alkylketten mit C₁₂-C₁₆ sind für niedrige Waschtemperaturen (z. B. unter ca. 50°C) und Alkylketten mit C₁₆-C₁₈ für höhere Waschtemperaturen (z. B. oberhalb ca. 50°C) bevorzugt.

Alkylethersulfate sind wasserlösliche Salze oder Säuren der Formel RO(A)ₘ SO₃M, worin R einen unsubstituierten C₁₀-C₂₄-Alkyl- oder Hydroxyalkylrest, bevorzugt einen C₁₂-C₂₀-Alkyl- oder Hydroxyalkylrest, besonders bevorzugt einen C₁₂-C₁₈-Alkyl- oder Hydroxyalkylrest darstellt. A ist eine Ethoxy- oder Propoxyeinheit, m ist eine Zahl größer als 0, vorzugsweise zwischen ca. 0,5 und ca. 6, besonders bevorzugt zwischen ca. 0,5 und ca. 3 und M ist ein Wasserstoffatom oder ein Kation wie z. B. Natrium, Kalium, Lithium, Calcium, Magnesium, Ammonium oder ein substituiertes Ammoniumkation. Beispiele von substituierten Ammoniumkationen umfassen Methyl-, Dimethyl-, Trimethylammonium- und quaternäre Ammoniumkationen wie Tetramethylammonium und Dimethylpiperidiniumkationen sowie solche, die von Alkylaminen wie Ethylamin, Diethylamin, Triethylamin oder Mischungen davon abgeleitet sind. Als Beispiele seien C₁₂-C₁₈-Fettalkoholethersulfate genannt, wobei der Gehalt an Ethylenoxideinheiten 1, 2, 2,5, 3 oder 4 mol pro mol des Fettalkoholethersulfats beträgt und in denen M Natrium oder Kalium ist.

In sekundären Alkansulfonaten kann die Alkylgruppe entweder gesättigt oder ungesättigt, verzweigt oder linear und gegebenenfalls mit einer Hydroxylgruppe substituiert sein. Die Sulfogruppe kann an einer beliebigen Position der C-Kette sein, wobei die primären Methylgruppen am Kettenanfang und Kettenende keine Sulfonatgruppen besitzen. Die bevorzugten sekundären Alkansulfonate enthalten lineare Alkylketten mit ca. 9 bis 25 Kohlenstoffatomen, bevorzugt ca. 10 bis ca. 20 Kohlenstoffatomen und besonders bevorzugt ca. 13 bis 17 Kohlenstoffatomen. Das Kation ist beispielsweise Natrium, Kalium, Ammonium, Mono-, Di- oder Triethanolammonium, Calcium oder Magnesium und Mischungen davon. Natrium als Kation ist bevorzugt.

Weitere geeignete anionische Tenside sind Alkenyl- oder Alkylbenzolsulfonate. Die Alkenyl- oder Alkylgruppe kann verzweigt oder linear und gegebenenfalls mit einer Hydroxylgruppe substituiert sein. Die bevorzugten Alkylbenzolsulfonate enthalten lineare Alkylketten mit ca. 9 bis 25 Kohlenstoffatomen, bevorzugt von ca. 10 bis ca. 13 Kohlenstoffatome, das Kation ist Natrium, Kalium, Ammonium, Mono-, Di- oder Triethanolammonium, Calcium oder Magnesium und Mischungen davon. Für milde Tensidsysteme ist Magnesium als Kation bevorzugt, für Standardwaschanwendungen dagegen Natrium. Gleiches gilt für Alkenylbenzolsulfonate.

Der Begriff anionische Tenside schließt auch Olefinsulfonate mit ein, die durch Sulfonierung von C₁₂-C₂₄-, vorzugsweise C₁₄-C₁₆-α-Olefinen mit Schwefeltrioxid und anschließende Neutralisation erhalten werden. Bedingt durch das Herstellverfahren, können diese Olefinsulfonate kleinere Mengen an Hydroxyalkansulfonaten und Alkandisulfonaten enthalten. Spezielle Mischungen von α-Olefinsulfonaten sind in US-3.332.880 beschrieben.

Weitere bevorzugte anionische Tenside sind Carboxylate, z. B. Fettsäureseifen und vergleichbare Tenside. Die Seifen können gesättigt oder ungesättigt sein und können verschiedene Substituenten wie Hydroxylgruppen oder α-Sulfonatgruppen enthalten. Bevorzugt sind lineare gesättigte oder ungesättigte Kohlenwasserstoffreste als hydrophober Anteil mit ca. 6 bis ca. 30, bevorzugt ca. 10 bis ca. 18 Kohlenstoffatomen.

Als anionische Tenside kommen weiterhin in Frage: Salze von Acylaminocarbonsäuren; die durch Umsetzung von Fettsäurechloriden mit Natriumsarkosinat im alkalischen Medium entstehenden Acylsarkosinate; Fettsäure-Eiweiß-Kondensationsprodukte, die durch Umsetzung von Fettsäurechloriden mit Oligopeptiden erhalten werden; Salze von Alkylsulfamidocarbonsäuren; Salze von Alkyl- und Alkylarylethercarbonsäuren; C₈-C₂₄-Olefinsulfonate; sulfonierte Polycarboxylsäuren, hergestellt durch Sulfonierung der Pyrolyseprodukte von Erdalkalimetallcitraten, wie z. B. beschrieben in GB-1.082.179; Alkylglycerinsulfate; Oleylglycerinsulfate; Alkylphenolethersulfate; primäre Paraffinsulfonate; Alkylphosphate; Alkyletherphosphate; Isethionate, wie Acylisethionate; N-Acyltauride; Alkylsuccinate; Sulfosuccinate; Monoester der Sulfosuccinate (besonders gesättigte und ungesättigte C₁₂-C₁₈-Monoester) und Diester der Sulfosuccinate (besonders gesättigte und ungesättigteC₁₂-C₁₈-Diester); Acylsarkosinate; Sulfate von Alkylpolysacchariden wie beispielsweise Sulfate von Alkylpolyglycosiden, verzweigte primäre Alkylsulfate und Alkylpolyethoxycarboxylate wie die der Formel RO(CH₂CH₂)ₖCH₂COO⁻M⁺, worin R C₈ bis C₂₂-Alkyl, k eine Zahl von 0 bis 10 und M ein Kation ist; Harzsäuren oder hydrierte Harzsäuren wie beispielsweise Rosin oder hydriertes Rosin oder Tallölharze und Tallölharzsäuren. Weitere Beispiele sind in "Surface Active Agents and Detergents" (Vol. I und II, Schwartz, Perry und Berch) beschrieben.

Als nichtionische Tenside kommen beispielsweise folgende Verbindungen in Frage:
- Polyethylen-, Polypropylen- und Polybutylenoxidkondensate von Alkylphenolen.

Diese Verbindungen umfassen die Kondensationsprodukte von Alkylphenolen mit einer C₆-C₂₀-Alkylgruppe, die entweder linear oder verzweigt sein kann, mit Alkenoxiden. Bevorzugt sind Verbindungen mit ca. 5 bis 25 mol Alkenoxid pro mol Alkylphenol.
- Kondensationsprodukte von aliphatischen Alkoholen mit ca. 1 bis ca. 25 mol Ethylenoxid.

Die Alkylkette der aliphatischen Alkohole kann linear oder verzweigt, primär oder sekundär sein und enthält im Allgemeinen ca. 8 bis ca. 22 Kohlenstoffatome. Besonders bevorzugt sind die Kondensationsprodukte von C₁₀- bisC₂₀-Alkoholen mit ca. 2 bis ca. 18 mol Ethylenoxid pro mol Alkohol. Die Alkylkette kann gesättigt oder auch ungesättigt sein. Die Alkoholethoxilate können eine enge ("Narrow Range Ethoxylates") oder eine breite Homologenverteilung des Ethylenoxides ("Broad Range Ethoxylates") aufweisen.

Beispiele von kommerziell erhältlichen nichtionischen Tensiden dieses Typs sind beispielsweise die Lutensol^{®}-Marken der BASF Aktiengesellschaft.
- Kondensationsprodukte von Ethylenoxid mit einer hydrophoben Basis, gebildet durch Kondensation von Propylenoxid mit Propylenglykol.

Der hydrophobe Teil dieser Verbindungen weist bevorzugt ein Molekulargewicht zwischen ca. 1.500 und ca. 1.800 auf. Die Anlagerung von Ethylenoxid an diesen hydrophoben Teil führt zu einer Verbesserung der Wasserlöslichkeit. Das Produkt ist flüssig bis zu einem Polyoxyethylengehalt von ca. 50 % des Gesamtgewichtes des Kondensationsproduktes, was einer Kondensation mit bis zu ca. 40 mol Ethylenoxid entspricht. Kommerziell erhältliche Beispiele dieser Produktklasse sind beispielsweise die Pluronic^{®}-Marken der BASF Aktiengesellschaft.
- Kondensationsprodukte von Ethylenoxid mit einem Reaktionsprodukt von Propylenoxid und Ethylendiamin.

Die hydrophobe Einheit dieser Verbindungen besteht aus dem Reaktionsprodukt von Ethylendiamin mit überschüssigem Propylenoxid und weist im Allgemeinen ein Molekulargewicht von ca. 2.500 bis 3.000 auf. An diese hydrophobe Einheit wird Ethylenoxid bis zu einem Gehalt von ca. 40 bis ca. 80 Gew.-% Polyoxyethylen und einem Molekulargewicht von ca. 5.000 bis 11.000 addiert. Kommerziell erhältliche Beispiele dieser Verbindungsklasse sind beispielsweise die Tetronic^{®}-Marken der BASF Corp.
- Semipolare nichtionische Tenside

Diese Kategorie von nichtionischen Verbindungen umfasst wasserlösliche Aminoxide, wasserlösliche Phosphinoxide und wasserlösliche Sulfoxide, jeweils mit einem Alkylrest von ca. 10 bis ca. 18 Kohlenstoffatomen. Semipolare nichtionische Tenside sind auch Aminoxide der Formel 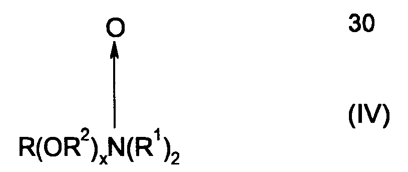 R ist hierbei eine Alkyl-, Hydroxyalkyl- oder Alkylphenolgruppe mit einer Kettenlänge von ca. 8 bis ca. 22 Kohlenstoffatomen. R² ist eine Alkylen- oder Hydroxyalkylengruppe mit ca. 2 bis 3 Kohlenstoffatomen oder Mischungen hiervon, jeder Rest R¹ ist eine Alkyl- oder Hydroxyalkylgruppe mit ca. 1 bis ca. 3 Kohlenstoffatomen oder eine Polyethylenoxidgruppe mit ca. 1 bis ca. 3 Ethylenoxideinheiten, und x bedeutet eine Zahl von 0 bis etwa 10. Die R¹-Gruppen können miteinander über ein Sauerstoff- oder Stickstoffatom verbunden sein und somit einen Ring bilden. Aminoxide dieser Art sind besonders C₁₀-C₁₈-Alkyldimethylaminoxide und C₈-C₁₂-Alkoxiethyl-Dihydroxyethylaminoxide.
- Fettsäureamide

Fettsäureamide besitzen die Formel 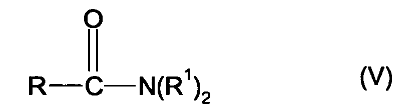 worin R eine Alkylgruppe mit ca. 7 bis ca. 21, bevorzugt ca. 9 bis ca. 17 Kohlenstoffatomen ist und R¹ unabhängig voneinander Wasserstoff, C₁-C₄-Alkyl, C₁-C₄-Hydroxyalkyl oder (C₂H₄O)ₓH bedeutet, wobei x von ca. 1 bis ca. 3 variiert. Bevorzugt sind C₈-C₂₀-Amide, -Monoethanolamide, -Diethanolamide und - Isopropanolamide.

Weitere geeignete nichtionische Tenside sind Alkyl- und Alkenyloligoglycoside sowie Fettsäurepolyglykolester oder Fettaminpolyglykolester mit jeweils 8 bis 20, vorzugsweise 12 bis 18 C-Atomen im Fettalkylrest, alkoxylierte Triglycamide, Mischether oder Mischformale, Alkyloligoglycoside, Alkenyloligoglycoside, FettsäureN-alkylglucamide, Phosphinoxide, Dialkylsulfoxide und Proteinhydrolysate.

Typische Beispiele für amphotere bzw. zwitterionische Tenside sind Alkylbetaine, Alkylamidbetaine, Aminopropionate, Aminoglycinate oder amphotere Imidazolinium-Verbindungen der Formel 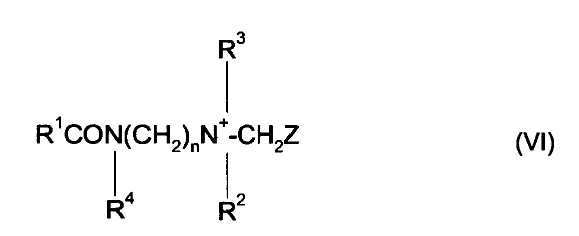 worin R¹ C₈-C₂₂-Alkyl- oder -Alkenyl, R² Wasserstoff oder CH₂CO₂M, R³ CH₂CH₂OH oder CH₂CH₂OCH₂CH₂CO₂M, R⁴ Wasserstoff, CH₂CH₂OH oder CH₂CH₂COOM, Z CO₂M oder CH₂CO₂M, n 2 oder 3, bevorzugt 2, M Wasserstoff oder ein Kation wie ein Alkalimetall-, Erdalkalimetall-, Ammonium- oder Alkanolammoniumkation bedeutet.

Bevorzugte amphotere Tenside dieser Formel sind Monocarboxylate und Dicarboxylate. Beispiele hierfür sind Cocoamphocarboxypropionat, Cocoamidocarboxypropionsäure, Cocoamphocarboxyglycinat (auch als Cocoamphodiacetat bezeichnet) und Cocoamphoacetat.

Weitere bevorzugte amphotere Tenside sind Alkyldimethylbetaine und Alkyldipolyethoxybetaine mit einem Alkylrest mit ca. 8 bis ca. 22 Kohlenstoffatomen der linear oder verzweigt sein kann, bevorzugt mit 8 bis 18 Kohlestoffatomen und besonders bevorzugt mit 12 bis 18 Kohlenstoffatomen.

Geeignete kationische Tenside sind substituierte oder unsubstituierte geradkettige oder verzweigte quartäre Ammoniumsalze vom Typ R¹N(CH₃)₃⁺X⁻, R¹R²N(CH₃)₂⁺X⁻, R¹R²R³N(CH₃)⁺X⁻ oder R¹R²R³R⁴N⁺X⁻. Die Reste R¹, R², R³ und R⁴ sind unabhängig voneinander vorzugsweise unsubstituiertes Alkyl mit einer Kettenlänge von 8 bis 24 C-Atomen, insbesondere von 10 bis 18 C-Atomen, Hydroxyalkyl mit 1 bis 4 C-Atomen, Phenyl, C₂-C₁₈-Alkenyl, C₇-C₂₄-Aralkyl, (C₂H₄O)ₓH, wobei x eine ganze Zahl von 1 bis 3 bedeutet, ein oder mehrere Estergruppen enthaltende Alkylreste oder cyclische quartäre Amoniumsalze sein. X ist ein geeignetes, dem Fachmann bekanntes Anion.

Weitere Wasch- und Reinigungsmittelinhaltsstoffe, die in der vorliegenden Erfindung enthalten sein können, umfassen anorganische und/oder organische Gerüststoffe, um den Härtegrad des Wassers zu mindern.

Diese Gerüststoffe können mit Gewichtsanteilen von etwa 5 % bis etwa 80 % in den Wasch- und Reinigungsmittelzusammensetzungen enthalten sein. Anorganische Gerüststoffe umfassen beispielsweise Alkali-, Ammonium- und Alkanolammoniumsalze von Polyphosphaten wie beispielsweise Tripolyphosphate, Pyrophosphate und glasartige polymere Metaphosphate, Phosphonate, Silikate, Carbonate einschließlich Bicarbonate und Sesquicarbonate, Sulfate und Aluminosilikate.

Beispiele für Silikatgerüststoffe sind die Alkalimetallsilikate, insbesondere diejenigen mit einem SiO₂:Na₂O-Verhältnis zwischen 1,6 : 1 und 3,2 : 1 sowie Schichtsilikate, beispielsweise die in der US 4,664,839 beschriebenen Natriumschichtsilikate, erhältlich von Clariant GmbH unter der Marke SKS^{®}. SKS-6^{®} ist ein besonders bevorzugter Schichtsilikatgerüststoff.

Aluminosilikatgerüststoffe sind für die vorliegende Erfindung besonders bevorzugt. Es handelt sich dabei insbesondere um Zeolithe mit der Formel Na_{z}[(AlO₂)₂(SiO₂)_{Y}] · xH₂O, worin z und y ganze Zahlen von mindestens 6 bedeuten, das Verhältnis von z zu y von etwa 1,0 bis 0,5 liegt und x eine ganze Zahl von 15 bis 264 bedeutet.

Geeignete Ionentauscher auf Aluminosilikatbasis sind im Handel erhältlich. Diese Aluminosilikate können von kristalliner oder amorpher Struktur sein und können natürlich vorkommend oder auch synthetisch hergestellt sein. Verfahren für die Herstellung von Ionentauschern auf Aluminosilikatbasis werden beispielsweise beschrieben in US-3.985.669 und US-4.605.509. Bevorzugte Ionentauscher auf der Basis synthetischer kristalliner Aluminosilikate sind erhältlich unter der Bezeichnung Zeolith A, Zeolith P (B) (einschließlich der in EP-A-0 384 070 offenbarten) und Zeolith X. Bevorzugt sind Aluminosilikate mit einem Partikeldurchmesser zwischen 0,1 und 10 µm.

Geeignete organische Gerüststoffe umfassen Polycarboxylverbindungen wie beispielsweise Etherpolycarboxylate und Oxydisuccinate, wie beispielsweise in US-3.128.287 und US-3.635.830 beschrieben. Ebenfalls sind die aus der US-4.663.071 bekannten TMS/TDS-Gerüststoffe geeignet.

Andere geeignete Gerüststoffe umfassen die Etherhydroxypolycarboxylate, Copolymere von Maleinsäureanhydrid mit Ethylen oder Vinylmethylether, 1,3,5-Trihydroxybenzol-2,4,6-trisulfonsäure und Carboxymethyloxybernsteinsäure, die Alkali-, Ammonium- und substituierten Ammoniumsalze von Polyessigsäuren wie z. B. Ethylendiamintetraessigsäure und Nitrilotriessigsäure sowie Polycarbonsäuren wie Mellithsäure, Bernsteinsäure, Oxydibernsteinsäure, Polymaleinsäure, Benzol-1,3,5-tricarbonsäure, Carboxymethyloxybernsteinsäure sowie deren lösliche Salze.

Gerüststoffe auf Citratbasis, z. B. Zitronensäure und ihre löslichen Salze, insbesondere das Natriumsalz, sind bevorzugte Polycarbonsäuregerüststoffe, die auch in granulierten Formulierungen, insbesondere zusammen mit Zeolithen und/oder Schichtsilikaten verwendet werden können.

Weitere geeignete Gerüststoffe sind die 3,3-Dicarboxy-4-oxa-1,6-hexandioate und die verwandten Verbindungen, die in US-4.566.984 offenbart sind.

Wenn Gerüststoffe auf Phosphorbasis verwendet werden können und insbesondere, wenn Seifenstücke für die Wäsche von Hand formuliert werden sollen, können verschiedene Alkalimetallphosphate wie etwa Natriumtripolyphosphat, Natriumpyrophosphat und Natriumorthophosphat verwendet werden. Ebenfalls können Phosphonatgerüststoffe wie Ethan-I-hydroxy-1,1-diphosphonat und andere bekannte Phosphonate, wie sie beispielsweise in US-3.159.581, US-3.213.030, US-3.422.021, US-3.400.148 und US-3.422.137 offenbart sind, verwendet werden.

Generell werden die mit dem Polymer der vorliegenden Erfindung verwendeten Reinigungsmittelinhaltsstoffe aus für Reinigungsmittel typischen Komponenten, wie oberflächenaktive Stoffe und Gerüststoffe, ausgewählt werden. Gegebenenfalls können die Reinigungsmittelinhaltsstoffe einen oder mehrere Reinigungshilfsstoffe oder andere Materialien enthalten, die die Reinigungswirkung verstärken, zur Behandlung oder Pflege des zu reinigenden Gegenstandes dienen oder die Gebrauchseigenschaften der Reinigungsmittelzusammensetzung ändern. Geeignete Reinigungshilfsmittel in Reinigungsmittelzusammensetzungen umfassen beispielsweise die in US-3.936.537 genannten Stoffe. Die Reinigungshilfsstoffe, die in den Reinigungsmittelzusammensetzungen der vorliegenden Erfindung benutzt werden können, umfassen beispielsweise Enzyme, insbesondere Proteasen, Lipasen und Cellulasen, Schaumverstärker, Schaumbremsen, Anlauf- und/oder Korrosionsschutzmittel, Suspensionsmittel, Farbstoffe, Füllmittel, optische Aufheller, Desinfektionsmittel, Alkalien, hydrotrope Verbindungen, Antioxidantien, Enzymstabilisatoren, Parfüme, Lösungsmittel, Lösungsvermittler, Wiederablagerungsverhinderer, Dispergiermittel, Farbübertragungsinhibitoren, z. B. Polyamin-N-oxide wie etwa Poly-(4-vinylpyridin-N-oxid), Polyvinylpyrrolidon, Poly-N-vinyl-N-methylacetamid und Copolymere von N-Vinylimidazol und N-Vinylpyrrolidon, Verarbeitungshilfsmittel, Weichmacher und Antistatikhilfsmittel.

Die Waschmittelzusammensetzungen können neben dem Polymer der vorliegenden Erfindung ein oder mehrere konventionelle Enzyme, wie Proteasen, Amylasen, Lipasen und Cellulasen enthalten. Ein besonders bevorzugtes Enzym ist Cellulase. Die hierbei verwendete Cellulase kann aus Bakterien oder Pilzen gewonnen sein und soll einen optimalen pH-Bereich zwischen 5 und 9,5 aufweisen. Geeignete Cellulasen sind in US 4.435.307 offenbart. Es handelt sich hierbei um Cellulase, die von einem Stamm von Humicola insolens produziert wird, insbesondere vom Stamm Humicola DSM 1800 oder einem anderen Cellulase-212-produzierenden Pilz, der zur Gattung Aeromonas gehört sowie Cellulase, die aus dem Hepatopankreas bestimmter mariner Mollusken extrahiert wurde. Geeignete Cellulasen sind ebenfalls in GB-A-2.075.028, GB-A-2.085.275 und DE-OS-2.247.832 offenbart.

Bevorzugte Cellulasen sind in WO-91/17243 beschrieben. Die erfindungsgemäßen Reinigungsmittelzusammensetzungen enthalten Enzyme in Mengen bis etwa 50 mg, bevorzugt von etwa 0,01 mg bis etwa 10 mg pro Gramm der Reinigungsmittelzusammensetzung. Bezogen auf das Gewicht der Waschmittelzusammensetzungen beträgt der Anteil der Enzyme -mindestens 0,001 Gew.-%, bevorzugt zwischen etwa 0,001 Gew.-% bis etwa 5 Gew.-%, insbesondere von etwa 0,001 Gew.-% bis etwa 1 Gew.-%, speziell von etwa 0,01 Gew.-% bis etwa 1 Gew.-%.

### Zusammensetzung maschinelle Geschirrreiniger

### Builder.

Es können wasserlösliche und wasserunlösliche Builder eingesetzt werden deren Hauptaufgabe im Binden von Calcium und Magnesium besteht. Übliche Builder, die zwischen 10 und 90 Gew.-% bezogen auf die gesamte Zubereitung zugegen sein können, sind nachfolgend aufgeführt.

Phosphate wie beispielsweise Alkaliphosphate und polymere Alkaliphosphate, die in Form ihrer alkalischen, neutralen oder sauren Natrium- oder Kaliumsalze vorliegen können. Beispiele hierfür sind Trinatriumphosphat, Tetranatriumdiphosphat, Dinatriumdihydrogenphosphat, Pentanatriumtripolyphosphat, sogenanntes Natriumhexametaphosphat, oligomeres Trinatriumphosphat mit Oligomerisierungsgraden von 5 bis 1000, insbesondere von 5 bis 50, sowie die entsprechenden Kaliumsalze bzw. Gemische aus Natriumhexametaphosphat und die entsprechenden Kaliumsalze bzw. Gemische aus Natrium- und Kaliumsalzen. Diese Phosphate werden vorzugsweise im Bereich von 25 Gew.-% bis 65 Gew.-% bezogen auf die gesamte Rezeptur und berechnet als wasserfreie Aktivsubstanz eingesetzt.

Niedermolekulare Carbonsäuren und ihre Salze, wie z.B. Alkalicitrate (wie z.B. wasserfreies Trinatriumcitrat oder Trinatriumcitratdihydrat), Alkalisuccinate, Alkalimalonate, Fettsäuresulfonate, Oxydisuccinate, Alkyl- oder Alkenyldisuccinate, Gluconsäuren, Oxadiacetate, Carboxymethyloxysuccinate, Tartratmonosuccinat, Tartratdisuccinat, Tartratmonoacetat, Tartratdiacetat, α-Hydroxypropionsäure, oxidierte Stärken, oxidierte Polysaccharide; homo- und copolymere Polycarbonsäuren und ihre Salze, wie z.B. Polyacrylsäure, Polymethacrylsäure, Copolymer Maleinsäure/Acrylsäure, Copolymer Maleinsäure/Acrylsäure/Vinylacetat; Pfropfpolymerisate von monoethylenisch ungesättigten Mono- und/oder Dicarbonsäuren auf Monosaccharide, Oligosaccharide, Polysaccharide oder Polyasparaginsäure; Aminopolycarboxylate und Polyasparaginsäure; Carbonate, wie beispielsweise Natriumcarbonat und Natriumbicarbonat.

Komplexbildner und Phosphonate und deren Salze, wie z.B. Nitrilotriessigsäure, Ethylendiamintetraessigsäure, Diethylentriaminpentaessigsäure, Hydroxyethylethylendiamintriessigsäure, Methylglycindiessigsäure, 2-Phosphono-1,2,4-butantricarbonsäure, Aminotri-(methylenphosphonsäure), 1-Hydroxyethylen(1,1-diphosphonsäure),Ethylendiamin-tetramethylenphosphonsäure, Hexamethylendiamin-tetramethylen-phosphonsäure und Diethylentriamin-pentamethylen-phosphonsäure.

Silikate wie beispielsweise Natriumdisilikat und Natriummetasilikat. Zu wasserunlöslichen Buildern zählen die Zeolithe und kristallinen Schichtsilikate, wobei letztere insbesondere der allgemeinen Formel NaMSiₓO₂ₓ₊₁ * y H₂O entsprechen, wobei M Natrium oder Wasserstoff darstellt, x eine Zahl von 1,9 bis 22, vorzugsweise 1,9 bis 4, ist und y für eine Zahl von 0 bis 33 steht. Bekannte Beispiele hierfür sind insbesondere α-Na₂Si₂O₅, β-Na₂Si₂O₅, δ-Na₂Si₂O₅. Ebenso zählen hierzu Mischungen der vorgenannten Buildersubstanzen. Bevorzugt werden Trinatriumcitrat und/oder Pentanatriumtripolyphosphat und/oder Natriumcarbonat und/oder Natriumbicarbonat und/oder Gluconate und/oder silikatische Builder aus der Klasse der Disilikate und/oder Metasilikate eingesetzt.

### Alkaliträger:

Als weitere Bestandteile können Alkaliträger zugegen sein. Als Alkaliträger gelten Alkalimetallhydroxide, Alkalimetallcarbonate, Alkalimetallhydrogencarbonate, Alkalimetallsesquicarbonate, Alkalisilikate, Alkalimetasilikate und Mischungen der vorgenannten Stoffe, wobei bevorzugt die Alkalicarbonate, insbesondere Natriumcarbonat, Natriumhydrogencarbonat oder Natriumsesquicarbonat eingesetzt werden. Bevorzugte Kombinationen aus Builder und Alkaliträger sind Mischungen aus Tripolyphosphat und Natriumcarbonat bzw. Tripolyphosphat, Natriumcarbonat und Natriumdisilikat.

### Tenside:

Bevorzugt werden schwach oder niedrigschäumende nichtionische Tenside in Anteilen von 0, 1 bis 20 Gew.-% (bevorzugt 0, 1 - 10 Gew.-%, 0,25 - 4 Gew.-%) eingesetzt. Dies sind beispielsweise Tenside aus der Gruppe der Fettalkoholethoxylate, wie sie z.B. kommerziell unter den Produktbezeichnungen Plurafac^{®} (BASF Aktiengesellschaft) oder Dehypon^{®} (Cognis) verfügbar sind. Weiterhin können Di- und Multiblockcopolymerisate aufgebaut aus Ethylenoxid und Propylenoxid eingesetzt werden, wie sie beispielsweise unter der Bezeichnung Pluronic^{®} (BASF Aktiengesellschaft) oder Tetronic^{®} (BASF Corporation) kommerziell erhältlich sind. Weiterhin können Umsetzungsprodukte aus Sorbitanestern mit Ethylenoxid und/oder Propylenoxid verwendet werden. Ebenfalls eignen sich Aminoxide oder Alkylglycoside. Eine Übersicht geeigneter nichtionischer Tenside geben beispielsweise die EP-A 0851 023 und die DE-A 198 19 187.

Die Formulierung kann weiterhin anionische oder zwitterionische Tenside enthalten, bevorzugt in Abmischung mit nichtionischen Tensiden. Geeignete anionische und zwitterionischer Tenside sind ebenfalls in den Schriften EP-A 0851 023 und die DE-A 198 19 187 genannt.

### Korrosionsinhibitoren:

Insbesondere können Silberschutzmittel aus der Gruppe der Triazole, der Benzotriazole, der Bisbenzotriazole, der Aminotriazole, der Alkylaminotriazole und der Übergangsmetallsalze oder -komplexe eingesetzt werden. Besonders bevorzugt zu verwenden sind Benzotriazol und/oder Alkylaminotriazol. Man findet in Reinigerformulierungen darüber hinaus häufig aktivchlorhaltige Mittel, die das Korrodieren der Silberoberfläche deutlich vermindern können. In chlorfreien Reinigern werden bevorzugt sauerstoff- und stickstoffhaltige organische redoxaktive Verbindungen, wie zwei- und dreiwertige Phenole, z.B. Hydrochinon, Brenzkatechin, Hydroxyhydrochinon, Gallussäure, Phloroglucin, Pyrogallol bzw. Derivate dieser Verbindungsklassen eingesetzt. Auch salz- und komplexartige anorganische Verbindungen, wie Salze der Metalle- Mn, Ti, Zr Hf, V, Co und Ce finden häufig Verwendung. Bevorzugt sind hierbei die Übergangsmetallsalze, die ausgewählt sind aus der Gruppe der Mangan- und Cobaltsalze und deren Komplexen, besonders bevorzugt der Cobalt(ammin)-Komplexe, der Cobalt(acetat)-Komplexe, der Cobalt-(Carbonyl)-Komplexe, der Chloride des Cobalts und des Mangans und des Mangansulfats. Ebenfalls können Zinkverbindungen oder Wismutverbindungen zur Verhinderung der Korrosion am Spülgut eingesetzt werden.

### Enzyme:

Dem Reinigungsmittel können zwischen 0 und 5 Gew.-% Enzyme bezogen auf die gesamte Zubereitung zugesetzt werden, um die Leistung der Reingungsmittel zu steigern oder unter milderen Bedingungen die Reinigungsleistung in gleicher Qualität zu gewährleisten. Zu den am häufigsten verwendeten Enzymen gehören Lipasen, Amylasen, Cellulasen und Proteasen. Weiterhin können auch Esterasen, Pectinasen, Lactasen und Peroxidasen eingesetzt werden. Bevorzugte Proteasen sind z.B. BLAP^{®}140 der Fa. Biozym, Optimase^{®} M-440 und Opticlean^{®} M-250 der Fa. Solvay Enzymes; Maxacal^{®} CX und Maxapem^{®} oder Esperase^{®} der Fa. Gist Brocades oder Savinase^{®} der Fa. Novo oder Purafect OxP der Fa. Genencor. Besonders geeignete Cellulasen und Lipasen sind Celluzym^{®} 0,7T und Lipolase^{®} 30T der Fa. Novo Nordisk. Besondere Verwendung als Amylasen finden Duramyl^{®} und Termamyl^{®} 60 T, und Termamyl^{®} 90 T der Fa. Novo, Amylase-LT^{®} der Fa. Solvay Enzymes, Maxamyl^{®} P5000 der Fa. Gist Brocades oder Purafect^{®} OxAm der Fa. Genencor. Auch andere Enzyme können verwendet werden.

### Weitere Zusätze:

Paraffinöle und Silikonöle können optional als Entschäumer und zum Schutz von Kunststoff- und Metalloberflächen eingesetzt werden. Entschäumer werden generell in Anteilen von 0,001 % bis 5% dosiert.

Das Polymer der vorliegenden Erfindung kann in Reinigerformulierungen sowohl für den Haushaltsbereich als auch für den gewerblichen Bereich eingesetzt werden. Gewerbliche Reinigertypen enthalten meist ein Buildersystem auf Basis von Pentanatriumtriphosphat, und/oder Natriumcitrat und/oder Komplexbildnern wie z.B., Nitrilotriacetat. Häufig wird im Gegensatz zu Haushaltsreinigern mit Natronlauge oder Kalilauge als Alkaliträger gearbeitet.

Das Polymer der vorliegenden Erfindung kann sowohl in gelförmigen, pulverförmigen, granulären als auch tablettenförmigen Geschirreinigern eingesetzt werden. Es ist möglich, das Polymer der vorliegenden Erfindung gegebenenfalls mit anderen Formulierungsbestandteilen in besondere Kompartimente einzuarbeiten, wie z.B. Mikrokapseln, Gelkapseln. Desweiteren kann das Polymer der vorliegenden Erfindung auch in speziellen Kompartimenten innerhalb von Geschirrreinigertabletten eingebaut werden, die ggf. ein gegenüber den anderen Tablettenkompartimenten unterschiedliches Auflöseverhalten zeigen können. Dies können sowohl bestimmte Tablettenschichten sein, als auch bestimmte in die Tablette eingelassene, mit der Tablette verklebte oder von der Tablette umhüllte Formkörper.

Die vorliegende Erfindung soll anhand der nachfolgenden Beispiele näher erläutert werden.

### Beispiele

Es werden Polyethylenimine (MW 800g/mol), bei denen der Anteil an A1, A2 und A3 jeweils 0,33 beträgt, zum Nitriladdukt umgesetzt und anschließend mittels Dimethylsulfat quarternisiert. Anschließend wird in Waschversuchen bei 25°C und 50°C die Bleichcharakteristik im Vergleich zu Tetraacetylethylendiamin (TAED) und Methylmorpholiniumacetonitrilhydrogensulfat (Sokalan^{®} BMG, BASF AG) untersucht.

Im Einzelnen werden 113 g (1,67 mol) Lupasol FG (AZ=829,9 mg KOH/g) mit 110 g Wasser vorgelegt. Unter Kühlung werden anschließend bei Raumtemperatur parallel 57,2 g (2,12 mol) Blausäure und 221,3 (2,11 mol) 30%-ige Formaldehydlösung in Wasser innerhalb ca. 30 min. zugetropft. Anschließend wird 60 min. bei Raumtemperatur gerührt. Die überschüssige Blausäure wird 30 min. lang bei Raumtemperatur mit N₂ gestrippt und danach mit 11 g 50 %ige Schwefelsäure ein pH von 6,9 eingestellt.
Analytik: Nebenkomponente 1,9 % Formaldehydcyanhydrin; < 0,1 % freie Blausäure

Die Ausbeute ergibt 492 g. der Ansatz wird geteilt und mit 50 [1], 75 [2], 100 [3] und 120 [4] Mol-% Dimethylsulfat umgesetzt.

Dies geschieht, in dem die Vorlage auf 30°C erwärmt wird und die entsprechende Menge an Dimethylsulfat unter Eisbadkühlung bei 28 bis 32°C zugetropft wird. Der pH wird mit 50 %iger NaOH bei 3,7 bis 3,9 gehalten. Abschließend wird 30 min. nachgerührt.

Standardprüfung im Launderometer mit 5% Aktivatorzusatz bei 25° und 50°C an Tee-, Rotwein-, Gras- und Curry- Gewebe. Zusätzlich wird die Entfernung von Triolein- und Olivenöl- Flecken von Baumwollgewebe untersucht. Dazu wird Triolein und Olivenöl mit 0,1% Sudanrot 7 B (= Solvent Red 19) eingefärbt. Dieser Farbstoff wird zuvor unter leichtem Erwärmen gelöst und homogenisiert. Die Präparation erfolgt durch Auftropfen mit einer Pipette, wobei das Prüfgewebe aufgespannt wird. 0,1 g der Lösung werden aufgetropft und über Nacht auf dem Gewebe ausgespreitet. Alle Prüfmuster werden doppelt bestimmt.

Dazu wird einem handelsüblichen Color-Waschmittel 15 Gew.-% Bleichmittel (Natriumpercarbonat) und 1,2 und 5 Gew.-% des entsprechenden Aktivators zugemischt und trocken homogenisiert.

Die Auswertung der Bleichversuche im Launderometer erfolgt über Remissionsmessung und Berechnung der Bleichwirkung an den verwendeten bleichbaren Anschmutzungen (Tee, Rotwein, Gras, Curry, Triolein und Olivenöl). Die Standardabweichung der Remmision R ist <1%.

### Waschbedingungen

| | |
|---|---|
| Waschgerät | Launder-O-Meter |
| Wasserhärte | 3 mmol Ca⁺⁺+Mg⁺⁺/l = 16,8 °dH |
| Verhältnis Ca : Mg : NaHCO₃ | 4:1:8 mol |
| Waschtemperatur 1 | 25°C |
| Waschtemperatur 2 | 50°C |
| Waschzeit | 30 min |
| Waschzyklen | je 1 |
| Waschmitteldosierung | 4,5 g/l |
| Flottenverhältnis | 1:20 |
| Gesamtflotte | 250 ml |
| Gewebe | 2,5 g BW/Tee |
| | 2,5 g BW/Rotwein (EMPA 114) |
| | 2,5 g BW/Gras (CFT-AS 4, Chlorophyll-Pflanzenöl) |

### Gewebevorbereitung

Für das Bleichgewebe EMPA 114 muss im Auswerteprogramm (CGTec) eine Gewebecharge angelegt sein. Nicht kommerziell erhältliche Anschmutzungen wie Tee, Chlorophyll wurden einzeln vorgemessen.

### Härte

Ansetzen von Stammhärte 1 (Ca⁺⁺ + Mg⁺⁺) und Stammhärte 2 (NaHCO₃) beide je 0,8 mol/l. Härtewasser wird vor Gebrauch überprüft. Anwendung findet die Bestimmung der Wasserhärte mit Titriplex-Lösung.

| | |
|---|---|
| Stammhärte 1 | 94,09 g Calciumchlorid * 2 H₂O und |
| | 32,53 g Magnesiumchlorid * 6 H₂O auf 1 Liter |
| | im Messkolben mit VE-Wasser auffüllen |
| Stammhärte 2 | 67,2 g Natriumhydrogencarbonat auf 1 Liter |
| | im Messkolben mit VE-Wasser auffüllen |
| Härtewasser 1: | 39,06 g Stammhärte 1 auf 1 I mit VE-Wasser auffüllen |
| Härtewasser 2: | 62,50 g Stammhärte 2 auf 1 I mit VE-Wasser auffüllen |

Spülwasser ist Trinkwasser

### Waschen

| | |
|---|---|
| Wäsche 25°C: | |
| Anfangstemperatur | 25°C |
| Waschtemperatur | 30 min bei 25°C |
| Endtemperatur | 25°C |
| | |
| Wäsche 50°C: | |
| Anfangstemperatur | 25°C, 10 min Aufheizzeit (2,5 °C/min) |
| Waschtemperatur | 20 min bei 50°C |
| Endtemperatur | 25°C, ca. 6 min Abkühlzeit |

In der nachfolgenden Tabelle 1 sind die Ergebnisse zusammengestellt.

Bei allen Bleichtestgeweben ist eine deutliche Wirksamkeit der Polymere gemäß der vorliegenden Erfindung als Bleichaktivatoren festzustellen, die zumindest für bestimmte Anschmutzungen gegenüber Bleichaktivatoren aus dem Stand der Technik überlegen ist. Speziell bei hydrophoben Anschmutzungen zeigen die erfindungsgemäßen Bleichaktivatoren eine höhere Aktivität im Vergleich zu Aktivatoren nach dem Stand der Technik, insbesondere bei tiefen Temperaturen (25°C).

**Tabelle 1**

| bei 25°C und 1% Bleichaktivator; Remissionswerte in % | | | | | | | |
|---|---|---|---|---|---|---|---|
| Bleichaktivator | ohne | TAED | BMG | [1] | [2] | [3] | [4] |
| Mittlere Molmasse M_{w} [g/mol] | - | 244 | 141 | 2000 | 2100 | 2200 | 2300 |
| Anteil an Monomereneinheiten mit zwei oder drei Methylgruppen [%] | - | - | 0 | 10 | 10 | 15 | 15 |
| Quaterisierungsgrad [%] | - | - | 100 | 25 | 50 | 80 | 100 |
| Rotwein | 54,6 | 58,4 | 61,8 | 57,5 | 57,5 | 56,2 | 56,9 |
| Tee | 29,9 | 34,5 | 48,5 | 38,0 | 38,0 | 39,3 | 38,4 |
| Gras | 39,8 | 39,2 | 40,1 | 39,9 | 39,9 | 40,9 | 40,5 |
| Curry | 63,7 | 65,1 | 69,2 | 67,6 | 68,6 | 68,0 | 67,7 |
| | | | | | | | |
| Triolein | 44,1 | 42,6 | 42,2 | 45,5 | 45,5 | 45,8 | 42,9 |
| Olivenöl | 39,1 | 40,0 | 39,9 | 41,9 | 45,1 | 45,3 | 43,2 |

Bei 50°C werden vergleichbare Bleichaktivierungen in Bezug auf TAED und BMG gefunden.

## Patentansprüche

1. Polymer zur Verwendung als Bleichaktivator die Monomereneinheiten enthaltend 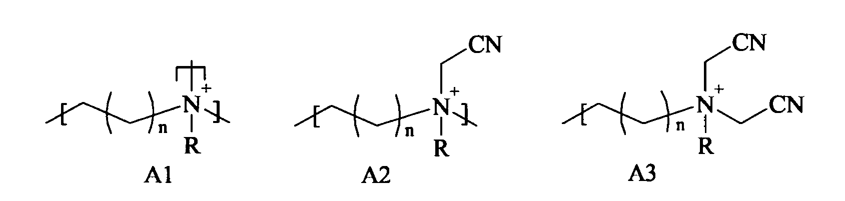 wobei n eine ganze Zahl von 1 bis 4 ist und R ein verzweigter oder unverzweigter gesättigter oder ungesättigter gegebenenfalls durch Sauerstoff unterbrochener Kohlenwasserstoffrest mit 1 bis 20 Kohlenstoffatomen ist.

2. Polymer nach Anspruch 1, **dadurch gekennzeichnet, dass** dieses auf Polyalkylenimin Basis aufgebaut ist.

3. Polymer nach Anspruch 1 oder 2, **dadurch gekennzeichnet, dass** dieses eine mittlere Molekularmasse in einem Bereich von 500 g/mol bis 500000 g/mol aufweist.

4. Polymer nach einem der Ansprüche 1 bis 3, **dadurch gekennzeichnet, dass** n = 1 und/oder R C₁-C₂₀ Alkyl ist.

5. Polymer nach einem der Ansprüche 1 bis 4, **dadurch gekennzeichnet, dass** das Polymer einen logP Wert von -3 bis 6,5 aufweist.

6. Polymer nach einem der Ansprüche 1 bis 5, **dadurch gekennzeichnet, dass** das Verhältnis von positiv geladenen Monomereneinheiten zu neutralen Monomereneinheiten mindestens 0,25 beträgt.

7. Polymer nach einem der Ansprüche 1 bis 6, **dadurch gekennzeichnet, dass** in höchstens 25 % der Monomereneinheiten R zwei- oder dreifach vorhanden ist.

8. Polymer nach einem der Ansprüche 1 bis 7, **dadurch gekennzeichnet, dass** der Anteil jedes der Monomereneinheiten A1, A2, A3 im Polymer jeweils unabhängig voneinander im Bereich von 0,01 bis 0,5 liegen.

9. Verfahren zur Herstellung eines Polymers nach einem der Ansprüche 1 bis 8 die Schritte enthaltend
a) Umsetzung eines Polymers die Monomereneinheiten enthaltend 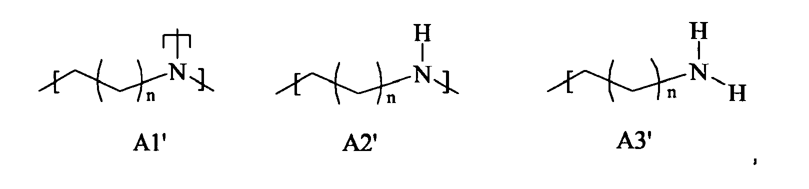 wobei n eine ganze Zahl von 1 bis 4 ist, mit Cyanwasserstoff und Formaldehyd;
b) Umsetzung des Produktes aus a) mit einem Reagenz zur Einführung der Gruppe R, wobei R die Bedeutung gemäß Anspruch 1 hat.

10. Verwendung eines Polymers nach einem der Ansprüche 1 bis 8 in Bleich-, Wasch-, Reinigungs- und Desinfektionsmitteln sowie insbesondere bei der Textil-und Papierbleiche.

## Claims

1. A polymer for use as a bleach activator, comprising the monomer units 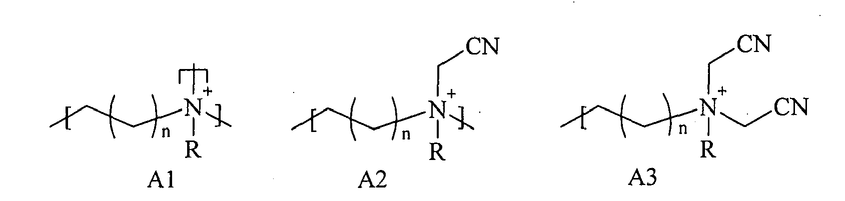 where n is an integer from 1 to 4 and R is a branched or unbranched, saturated or unsaturated, optionally oxygen-interrupted hydrocarbyl radical having from 1 to 20 carbon atoms.

2. A polymer according to claim 1, which is based on polyalkyleneimine.

3. A polymer according to claim 1 or 2, which has an average molecular mass in a range from 500 g/mol to 500 000 g/mol.

4. A polymer according to any of claims 1 to 3, wherein n = 1 and/or R is C₁-C₂₀ alkyl.

5. A polymer according to any of claims 1 to 4, which has a logP value of from -3 to 6.5.

6. A polymer according to any of claims 1 to 5, wherein the ratio of positively charged monomer units to uncharged monomer units is at least 0.25.

7. A polymer according to any of claims 1 to 6, wherein R is present two or three times in at most 25% of the monomer units.

8. A polymer according to any of claims 1 to 7, wherein the proportion of each of the monomer units A1, A2, A3 in the polymer is in each case independently in the range from 0.01 to 0.5.

9. A process for preparing a polymer according to any of claims 1 to 8, comprising the steps of
a) reacting a polymer comprising the monomer units 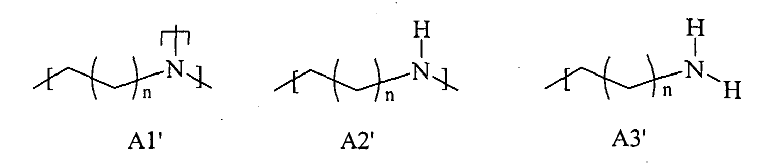 where n is an integer from 1 to 4 with hydrogen cyanide and formaldehyde;
b) reacting the product from a) with a reagent for introducing the R group, R being as defined in claim 1.

10. The use of a polymer according to any of claims 1 to 8 in bleaching compositions, laundry detergents, cleaning compositions and disinfectant compositions, and in particular in textile bleaching and paper bleaching.

## Revendications

1. Polymère à utiliser comme activateur de blanchiment, contenant les unités monomères : 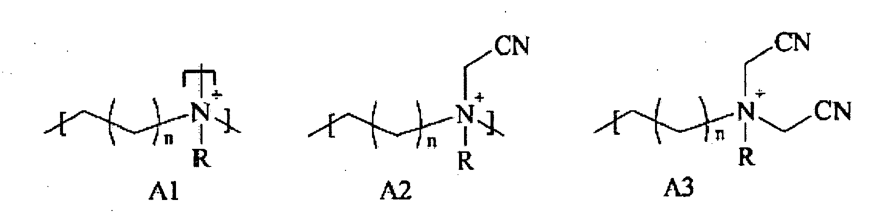 où n est un nombre entier allant de 1 à 4 et R est un reste hydrocarbure ramifié ou non ramifié, saturé ou insaturé, le cas échéant interrompu par un oxygène, ayant 1 à 20 atomes de carbone.

2. Polymère selon la revendication 1, **caractérisé en ce que** celui-ci est élaboré sur base d'une polyalkylèneimine.

3. Polymère selon la revendication 1 ou 2, **caractérisé en ce que** celui-ci présente une masse moléculaire moyenne située dans l'intervalle allant de 500 g/mole à 500 000 g/mole.

4. Polymère selon l'une des revendications 1 à 3, **caractérisé en ce que** n = 1 et/ou R est un alkyle en C₁-C₂₀.

5. Polymère selon l'une des revendications 1 à 4, **caractérisé en ce que** le polymère présente une valeur logP allant de -3 à 6,5.

6. Polymère selon l'une des revendications 1 à 5, **caractérisé en ce que** le rapport des unités monomères chargées positivement aux unités monomères neutres se situe à au moins 0,25.

7. Polymère selon l'une des revendications 1 à 6, **caractérisé en ce que** dans au maximum 25 % des unités monomères, R est présent deux ou trois fois.

8. Polymère selon l'une des revendications 1 à 7, **caractérisé en ce que** la proportion de chacune des unités monomères A1, A2 et A3 dans le polymère se situe chaque fois, indépendamment l'une de l'autre, dans l'intervalle allant de 0,01 à 0,5.

9. Procédé de préparation d'un polymère selon l'une des revendications 1 à 8, contenant les étapes de :
a) réaction d'un polymère contenant les unités monomères : 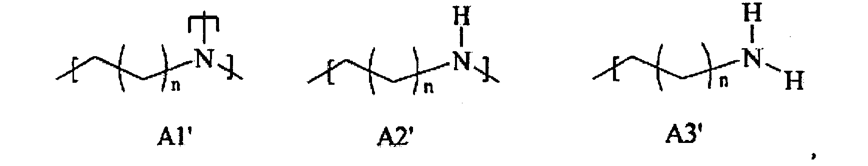 où n est un nombre entier allant de 1 à 4, avec l'acide cyanhydrique et le formaldéhyde ;
b) réaction du produit de a) avec un réactif pour l'introduction du groupe R, où R a la signification selon la revendication 1.

10. Utilisation d'un polymère selon l'une des revendications 1 à 8, dans des agents de blanchiment, de lavage, de nettoyage et de désinfection, ainsi qu'en particulier, dans le blanchiment des textiles et du papier.
